# EUROPEAN PATENT SPECIFICATION

(11) **EP 0 616 880 B1**
(45) Date of publication and mention of the grant of the patent: **03.05.2000**
(21) Application number: 94102603.1
(22) Date of filing: 22.02.1994
(51) Int. Cl.: B29C 59/04, B32B 31/00

(54) **Method for producing thermoplastic resin sheet or film**
Verfahren zur Herstellung von thermoplastischen Harz-Platten oder Folien
Procédé pour la fabrication de films ou plaques en résine thermoplastiques

(30) Priority: 25.02.1993 JP 5942093
(43) Date of publication of application: 28.09.1994
(73) Proprietor: IDEMITSU PETROCHEMICAL CO., LTD., Minato-ku, Tokyo (JP)
(72) Inventor: Fujii, Atsushi, c/o Idemitsu Petrochem. Co. Ltd., Himeji-shi, Hyogo-ken (JP); Funaki, Akira, c/o Idemitsu Petrochem. Co. Ltd., Himeji-shi, Hyogo-ken (JP); Yukumoto, Tohru, c/o Idemitsu Petrochem. Co. Ltd., Himeji-shi, Hyogo-ken (JP)
(74) Representative: Gille Hrabal Struck Neidlein Prop Roos

(56) References cited:
- EP-A- 0 352 241
- CH-A- 661 804
- FR-A- 2 167 876
- US-A- 2 442 598
- US-A- 2 451 597
- US-A- 2 567 275
- US-A- 3 758 649
- US-A- 3 994 765
- US-A- 4 193 959
- US-A- 4 826 555

## Description

### FIELD OF THE INVENTION

The present invention relates to a method for efficiently producing a non-stretched sheet or film of a thermoplastic resin by simple operation, the surface of which is smoothed (glazed) or embossed by high-quality treatment. The sheet or film to be produced by the present invention is favorably used in the field of wrapping materials for foods and medicines.

### PRIOR ART AND BACKGROUND OF THE INVENTION

It is desired that thermoplastic resin sheets and films to be used for wrapping foods and medicines are highly transparent. The present applicant has heretofore proposed various techniques of controlling crystallization of crystalline thermoplastic resins by rapidly cooling them, as methods for improving the transparency of sheets or films of crystalline thermoplastic resins (e.g., Japanese Patent Publication Nos. 62-41457 and 62-10816) and has already put them into practical use.

Recently, however, further improvement in the quality of sheet products and also in the productivity of them has been desired. For this, for example, glazing (smoothing) or embossing (patterning) of the surfaces of sheets or films made of thermoplastic resins, as the surface treatment of them, has been carried out in this technical field. The post-treatment of the kind may be conducted, using roll-combined devices.

However, in order to treat the surfaces of sheets or films made of thermoplastic resins by rapid, high-quality surface treatment (for example, by rapid, high-quality surface smoothing or precision embossing), complicated devices such as multi-staged rolls are needed. In addition, the surface treatment has the following problems.

For example, glazing (smoothing) with pressure rolls is possible, by which, however, the sheets treated are oriented only in the MD direction so that their physical properties could not be well-balanced.

Embossing (patterning) with pressure rolls is accompanied by a problem that the embossing accuracy is lowered when the treatment is conducted at high speeds.

On the other hand, the application of a double-belt pressing technique, as one of pressing techniques, to the surface treatment or lamination of thermoplastic resin sheets is extremely effective, but this is accompanied by a problem that the devices for the treatment are large-scaled, complicated and expensive.

US-A-2,567,275 discloses a continuous process of goffering thermoplastic sheets which includes the steps of placing the thermoplastic sheet on an endless pressure band, heating said thermoplastic sheet on the face to be finished, passing the endless pressure band in a looped path about a substantial portion of the circumference of a rotating drum on which the pattern to be embossed is engraved, said drum being kept at a temperature lower than the temperature at which the thermoplastic sheet may be goffered, the thermoplastic sheet to be goffered being pressed over said looped path between the cooled rotating drum and endless pressure band, with its warmed face facing the engraved surface of the rotating drum. As shown in the drawing of US-A-2,567,275, heat is supplied by the hot-air heaters 8 and 10 only onto one surface of the sheet R which is later goffered by the cooled roll 1.

US 3,758,649 discloses a method of pressing a holographic relief pattern onto a flexible thermoplastic tape using a certain construction therefor. This document is not related to the problems of surface treatment of thermoplastic resin sheets to improve their transparency.

### SUMMARY OF THE INVENTION

The present invention is to overcome the above-mentioned problems in the prior art and to provide a method for efficiently producing a non-stretched, thermoplastic resin sheet or film by simple operation, the surface of which is treated by high-quality and high-grade treatment of the invention.

First, the present invention provides a method for producing a thermoplastic resin sheet or film, the surface of which is smoothed or embossed, in which a thermoplastic resin is hot-melted and then cooled to give a thermoplastic resin sheet or film, it is pressed against the outer surface of a heated roll or a heated, endless metal belt, adhered thereto under heat and moved along with the roll or belt, then it is inserted and pressed between the outer surface of the heated roll and the outer surface of the heated endless metal belt, and thereafter it is released from the contact with the roll and then from that with the endless metal belt to be removed therefrom, wherein in case of glazing (smoothing) the outer surface of the heated roll and the heated endless metal belt are mirror finished, and in case of embossing the heated roll is an embossing roll or an embossing paper is sandwiched between the thermoplastic resin sheet or film and the heated endless metal belt.

Secondly, the present invention provides a method for producing a laminate sheet or film, the surface of which is smoothed or embossed, of thermoplastic resins using two kinds of thermoplastic resin sheets or films each obtained by hot-melting a thermoplastic resin and then cooling it, in which one of the thermoplastic resin sheets or films is pressed against and adhered under heat to the outer surface of a heated roll while the other also to the outer surface of a heated, endless metal belt, they are moved along with the roll and the belt, then the both thermoplastic resin sheets or films are inserted and pressed together between the outer surface of the roll and the outer surface of the endless metal belt, and thereafter the resulting laminate is released from the contact with the roll and then from that with the endless metal belt to be removed therefrom, wherein in case of glazing (smoothing) the outer surface of the heated roll and the heated endless metal belt are mirror finished, and in case of embossing the heated roll is an embossing roll or an embossing paper is sandwiched between the laminate resin sheet or film and the heated endless metal belt.

Thirdly, the present invention provides a method for producing a laminate sheet or film, the surface of which is smoothed or embossed, of thermoplastic resins using thermoplastic resin sheets or films of three kinds or more each obtained by hot-melting a thermoplastic resin and then cooling it, in which one of the thermoplastic resin sheets or films is pressed against and adhered under heat to the outer surface of a heated roll while another one also to the outer surface of a heated, endless metal belt, they are moved along with the roll and the belt while the last one or the remaining ones is/are inserted between the previous two thermoplastic resin sheets or films, then all these thermoplastic resin sheets or films are pressed together between the outer surface of the roll and the outer surface of the endless metal belt, and thereafter the resulting laminate is released from the contact with the roll and then from that with the endless metal belt to be removed therefrom, wherein in case of glazing (smoothing) the outer surface of the heated roll and the heated endless metal belt are mirror finished, and in case of embossing the heated roll is an embossing roll or an embossing paper is sandwiched between the laminate resin sheet or film and the heated endless metal belt.

### BRIEF EXPLANATION OF THE DRAWINGS

Fig. 1 is an explanatory view showing the first embodiment of the device to be used in carrying out the first method of the present invention.
Fig. 2 is an explanatory view showing the second embodiment of the device to be used in carrying out the first method of the present invention.
Fig. 3 is an explanatory view showing the third embodiment of the device to be used in carrying out the first method of the present invention.
Fig. 4 is an explanatory view showing the fourth embodiment of the device to be used in carrying out the first method of the present invention.
Fig. 5 is an explanatory view showing the fifth embodiment of the device to be used in carrying out the first method of the present invention.
Fig. 6 is an explanatory view showing one embodiment of the device to be used in carrying out the second method of the present invention.
Fig. 7 is an explanatory view showing one embodiment of the device to be used in carrying out the third method of the present invention.

In the drawings, 1 is a letting-off roll, 1' is another letting-off roll, 1'' is still another letting-off roll, 2 is an untreated sheet, 2' is another untreated sheet, 2'' is still another untreated sheet, 3 is a pressure roll, 3' is another pressure roll, 3'' is still another pressure roll, 4 is a hot roll, 5 is an endless metal belt, 6 is an inside heating roll, 7 is a cooling roll, 8 is a backup roll, 9 is a cooling pressure roll, and 10 is a take-up roll.

### DETAILED DESCRIPTION OF THE INVENTION

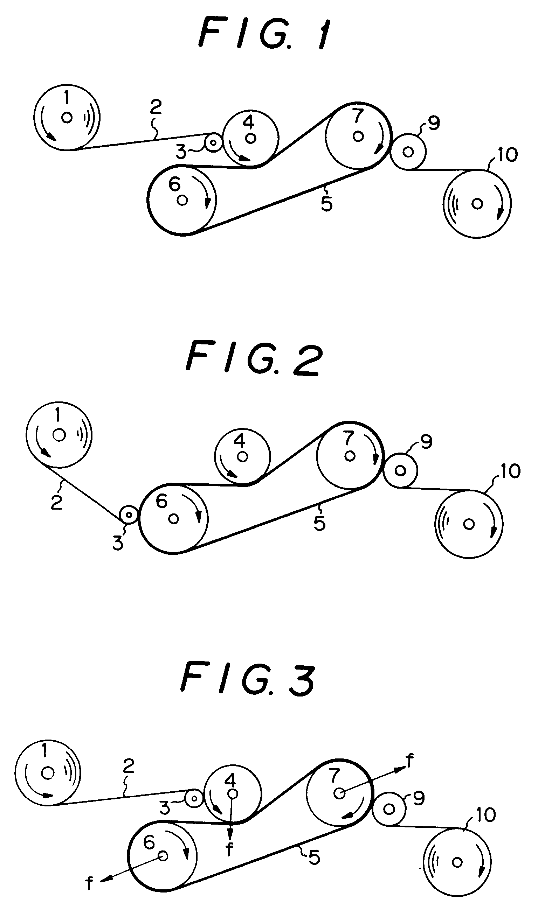

The methods of the present invention will be explained hereunder, with reference to the drawings. Fig. 1 is an explanatory view showing the first embodiment of the device to be used in carrying out the first method of the present invention. Fig. 1 illustrates one embodiment of pressing a thermoplastic resin sheet or film that has been obtained by hot-melting and cooling a thermoplastic resin against the outer surface of a heated roll by the aid of a rubber roll so as to make the sheet or film adhered to the outer surface under heat to thereby heat the sheet or film with the heated roll. Instead of this, the thermoplastic resin sheet or film may also be pressed and adhered under heat to the outer surface of a heated, endless metal belt, as illustrated in Fig. 2.

In the first method of the present invention, in general, a thermoplastic resin sheet or film (this may be hereinafter referred to as an untreated sheet 2) that has been wound around a letting-off roll 1 is used as the sheet or film to be treated. However, such off-line treatment is not limitative, but in-line treatment may also be employed where a sheet or film is, immediately after having been formed, fed directly to the process line.

The thermoplastic resin to be used as the raw material for the sheet or film in the first method of the present invention is not specifically defined. For example, not only crystalline resins such as polyethylene, polypropylene, polyethylene terephthalate, etc. but also non-crystalline or amorphous resins such as polystyrene, polycarbonate, polyvinyl chloride, polymethyl methacrylate, etc. may be employed. However, the present invention is extremely effective for crystalline resins which are difficult to form highly-transparent products, especially polypropylenes (including propylene homopolymers, crystalline propylene copolymers comprising one or more comonomers, their mixtures) and is therefore favorably applied thereto.

Where a thermoplastic resin sheet or film with low internal haze is used as the untreated sheet or film to be treated by this method, the finally obtained sheet or film will have a high transparency and a high quality. For crystalline resins which are difficult to lower their internal haze, especially polypropylenes, their internal haze may be lowered by rapidly cooling them or by incorporating a nulceating agent or a petroleum resin thereinto so as to make their crystal structures finely-crystalline or convert them into amorphous ones.

The thickness of the sheet or film to be obtained in the present invention is generally from 0.1 to 2 mm, preferably from 0.2 to 1.0 mm.

In accordance with the method of the present invention, in general, the thermoplastic resin or sheet (namely, the untreated sheet 2) that has been wound around the letting-off roll 1 is unreeled, and this is pressed against the outer surface of a heated roll 4 (this may be hereinafter referred to as a hot roll) or against the outer surface of a heated, endless metal belt 5, adhered thereto under heat and moved along with it while heating.

In this step, the hot roll 4 and the endless metal belt 5 is kept heated, and their temperatures are such that the thermoplastic resin sheet or film 2 (namely, the untreated sheet 2) may be at temperatures falling between its softening point and its melting point, preferably between 120° C and 350° C. For amorphous resins not having a definit melting point, the temperatures may be not lower than their softening point and the upper limit of the heating temperatures is not specifically defined. If the temperatures of the hot roll 4 and the endless metal belt 5 are lower than the softening point of the resins, the glazing or embossing will be finished poor or the adhesion strength of the laminated thermoplastic resin sheet or film 2 will be lowered. On the other hand, if the temperatures of the hot roll 4 and the endless metal belt 5 are higher than the melting point of the resins, the thermoplastic resin sheet or film 2 will fuse to stick to the hot roll 4 or the endless metal belt 5 or banks will be formed to give bank marks to the surface of the thermoplastic resin sheet or film 2. For crystalline resin sheets, such high temperatures are not favorable, as accelerating the crystallization of the resins to increase the internal haze of the sheets.

In carrying out the first method of the present invention, it is necessary that the thermoplastic resin sheet or film 2 (namely, the untreated sheet 2) is pressed against and adhered to the outer surface of the hot roll 4 or the outer surface of the heated, endless metal belt 5 and that the former is moved along with the latter. In other words, it is necessary that the former is pressed against and adhered to the latter and is moved along with the latter in such a way that no air exists between the thermoplastic resin sheet or film 2 and the outer surface of the hot roll 4 or that of the heated, endless metal belt 5. For this, it is preferred to employ a pressure roll 3 made of an elastic material, as shown in Fig. 1. As the pressing means, any others may be employed but the best is to employ the pressure roll 3 made of an elastic material such as silicon rubber or fluorine rubber so as to press the sheet or film 2 against the outer surface of the roll 4 or the belt 5.

If the thermoplastic resin sheet or film 2 is heated too rapidly with the hot roll 4 or the endless metal belt 5, the sheet or film 2 will be expanded too rapidly so that it will be lifted up from the surface of the roll or the belt. In order to evade the trouble, it is preferred to pre-heat the sheet or film 2 at temperatures of approximately from 70 to 80° C, as will be mentioned hereinafter. The pre-heating may be effected, for example, by means of a preheating roll (not shown) prior to the contact of the sheet or film 2 with the hot roll 4 or the endless metal belt 5.

In accordance with the first method of the present invention, since the thermoplastic resin sheet or film 2 (namely, the untreated sheet 2) is moved while being pressed against and adhered to the outer surface of the heated hot roll 4 or that of the heated, endless metal belt 5, the surface of the sheet or film 2 is heated during the movement by means of the hot roll 4 and the endless metal belt 5.

As the hot roll 4, any materials with high thermal conductivity, such as metals, may be employed. It is desired that the diameter of the roll 4 is larger in view of the durability of itself. In practice, however, the diameter is suitably within the range of approximately from 100 to 1000 mm.

On the other hand, as the endless metal belt 5, usable are stainless steels, carbon steels and titanium alloys. Of these, preferred are stainless steels.

In general, the endless metal belt 5 has a thickness of approximately from 0.4 to 1.0 mm. The endless metal belt 5 of this kind is run generally at a relatively high speed of from 10 to 40 m/min.

The endless metal belt 5 is kept heated with the inside heating roll 6 or, if desired, with any other rolls located in the inside region surrounded by the belt or outside heaters (all not shown) that are kept heated.

The temperatures of the hot roll 4 and the endless metal belt 5 vary, depending on the kind of the resin employed, the thickness of the resin sheet or film being treated and the treating speed. However, they are defined such that the temperature of the thermoplastic resin sheet or film 2 (namely, the untreated sheet 2) may fall between the softening point of the sheet or film 2 and the melting point of the same, as so mentioned above.

The untreated sheet 2 that has been kept pressed against and adhered to the hot roll or the endless metal belt 5 under heat in the manner mentioned above is inserted between the outer surface of the hot roll 4 and the outer surface of the endless metal belt 5 whereby it is again pressed therebetween. Namely, the heated, untreated sheet 2 is inserted between the the outer surface of the hot roll 4 and the outer surface of the endless metal belt 5, whereby the sheet 2 is again pressed by the hot roll 4 and the endless metal belt 5 while being moved therebetween. Accordingly, the sheet 2 is subjected to high-quality treatment for, for example, glazing or embossing.

In this case, the pressure to be applied onto the surface of the sheet 2 is 1 kg/cm2 or more, preferably from 3 to 600 kg/m2. The pressure may be controlled by adjusting (for example, increasing or decreasing) the distance between the cooling roll 7 located in the inside of the endless metal belt 5 and the inside heating roll 6 or by moving the hot roll 4 upwardly or downwardly to thereby impart a suitable tension to the sheet 2.

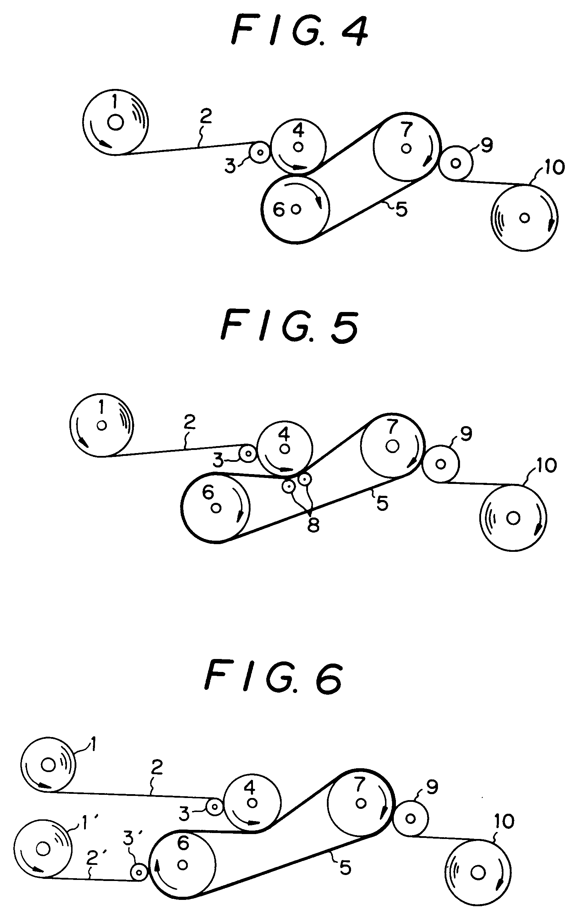

Alternatively, the pressure may be adjusted by the inside heating roll 6 located in the inside of the endless metal belt 5, as illustrated in Fig. 4.

The provision of plural backup rolls 8, as illustrated in Fig. 5 enlarges the area of the sheet 2 being pressed and prolongs the pressing time, whereby the treatment of the sheet 2 may be made more uniform.

The backup rolls 8 may be either metal rolls or elastic rolls, and it is desired that they yield a line pressure of from 10 to 600 kg/cm.

The area of the sheet 2 to be pressed between the roll 4 and the belt 5 is determined in consideration of various conditions including the kind of the thermoplastic resin used (with respect to its thermal properties), the thickness of the thermoplastic resin sheet or film 2 being treated and the treating speed. In view of the strength and durability of the endless metal belt 5, the angle between the hot roll 4 and the endless metal belt 5 is limited to be at most about 180 degrees. By making the position of the inside cooling roll 7 variable, the angle between the belt 5 and the hot roll 4 may be freely adjusted. Such variable location is preferred.

In carrying out the first method of the present invention, it is desired that the pressure by the backup rolls 8 is initiated at the point at which the hot roll 4 is first brought into contact with the endless metal belt 5.

If the backup rolls 8 are located in the downstream from the point at which the hot roll 4 is first brought into contact with the endless metal belt 5, air would be introduced between the roll 4 and the belt 5. Such location is therefore unfavorable. This is because the introduction between them causes the uneven treatment of the sheet being treated so that a good treated sheet cannot be obtained.

The positions of the backup rolls 8 cannot be determined indiscriminately as concrete values, since they vary depending on the kind and thickness of the thermoplastic resin sheet or film 2 being treated and also the treating speed and temperature.

To glaze (smooth) the thermoplastic resin sheet or film 2 in accordance with the first method of the present invention, the outer surface of the hot roll 4 and that of the endless metal belt 5 must be mirror-finished.

In this case, the hot roll 4 and the endless metal belt 5 shall be mirror-finished to such a degree that they have a surface roughness of 3.0 µm or less, preferably 1.0 µm or less, more preferably 0.5 µm or less.

To emboss the sheet or film 2, the hot roll 4 may be an embossing roll or, alternatively, an embossing paper may be sandwiched between the sheet 2 being treated and the endless metal belt 5.

In the manner as mentioned above, the heated, untreated sheet 2 is introduced between the outer surface of the hot roll 4 and that of the endless metal belt 5, while the endless metal belt 5 is driven to move the sheet 2 along with it, whereby the untreated sheet 2 is pressed between the hot roll 4 and the endless metal belt 5 to be subjected to high-quality treatment, for example glazing or embossing. After the treatment, the sheet 2 is then released from the contact with the hot roll 4 and then with the endless metal belt 5 and, hence, it is removed from the roll 4 and the belt 5.

Precisely, the sheet 2 thus treated in the manner mentioned above is first released from the contact with the hot roll 4, then further moved along with the endless metal belt 5, and thereafter released also from the contact with the endless metal belt 5, whereby the treated sheet 2 is removed from them.

It is preferred that the treated sheet 2 is cooled with a cooling pressure roll 9 or the like prior to or simultaneously with the release of the sheet 2 from the endless metal belt 5. By removing the sheet 2 from the belt 5 after having been cooled, the surface of the treated sheet 2 may be prevented from being roughened due to the removal. In addition, the cooling pressure roll 9 also acts as a means for preventing the treated sheet 2 from being lifted up from the surface of the belt 5, whereby the sheet 2 may be cooled uniformly. Thus, the roll 9 has another advantage to augment the cooling efficiency with it.

The treated sheet 2 is then wound around the take-up roll 10 to be the final product. Prior to the winding step, the sheet 2 may be heat-treated (or annealed) again using a hot roll or the like. By the treatment, the treated sheet 2 may be prevented from curling. The heating temperature for the step varies, depending on the material of the sheet 2, but in general, it may be from 80 to 130° C, preferably from 110 to 130° C.

The above-mentioned embodiment is to treat a single-layered sheet or film. Apart from this, however, the device illustrated in Fig. 6 may be used to produce a thick, two-layered laminate. Fig. 6 is an explanatory view showing one embodiment of the device to be employed in carrying out the second method of the present invention.

Precisely, the second method of the present invention is to produce a laminate sheet or film of thermoplastic resins using two kinds of thermoplastic resin sheets or films each obtained by hot-melting a thermoplastic resin and then cooling it, in which one of the thermoplastic resin sheets or films is pressed against and adhered under heat to the outer surface of a heated roll while the other also to the outer surface of a heated, endless metal belt, they are moved along with the roll and the belt, then the both thermoplastic resin sheets or films are inserted and pressed between the outer surface of the roll and the outer surface of the endless metal belt, and thereafter the resulting laminate is released from the contact with the roll and then from that with the endless metal belt to be removed therefrom.

The second method is different from the above-mentioned first method in that one thermoplastic resin sheet or film is pressed against and adhered under heat to the outer surface of a heated roll, like in the first method mentioned above, while the other thermoplastic resin sheet or film is pressed against and adhered under heat to the outer surface of a heated, endless metal belt, then they are moved along with the roll and the belt, and thereafter they are combined together and are inserted and pressed between the outer surface of the roll and the outer surface of the endless metal belt. In the second method, one of the thermoplastic resin sheets or films shall be moved necessarily while it is kept pressed against and adhered under heat to the outer surface of the hot roll 4.

The second method of the present invention will be explained in detail hereunder. The second method uses two kinds of thermoplastic resin sheets or films.

For example, two untreated sheets 2 and 2' of the same kind or different kinds are let out from two letting-out rolls 1 and 1', respectively, these are preferably pre-heated with pre-heating rolls, and then one untreated sheet 2 is moved while being kept adhered to the outer surface of the hot roll 4 like in the first method mentioned above. The other untreated sheet 2' is moved while being kept adhered to the outer surface of the heated, endless metal belt 5.

The materials of the hot roll 4 and the endless metal belt 5 and the other conditions in the second method are the same as those in the first method mentioned above.

After the two untreated sheets 2 and 2' are moved while being kept adhered to the outer surface of the hot roll 4 and to the outer surface of the endless metal belt 5, respectively, as mentioned above, the two are combined together and are inserted between the outer surface of the hot roll 4 and the outer surface of the endless metal belt 5, or that is, into the contact point between the roll 4 and the belt 5, and thereafter these are treated in the same manner as in the first method mentioned above. Hence, a two-layered laminate of thermoplastic resins is produced by the second method.

Also in this case, the treated laminate is glazed or embossed to be a two-layered laminate with higher quality.

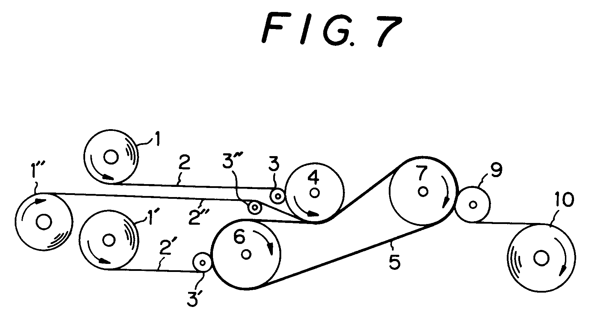

In addition, the device as illustrated in Fig. 7 may also be employed in the present invention to obtain a three-layered or more multi-layered, thick laminate. Fig. 7 is an explanatory view showing one embodiment of the device to be used in carrying out the third method of the present invention.

Precisely, the third method of the present invention is to produce a laminate sheet or film of thermoplastic resins using thermoplastic resin sheets or films of three kinds or more each obtained by hot-melting a thermoplastic resin and then cooling it, in which one of the thermoplastic resin sheets or films is pressed against and adhered under heat to the outer surface of a heated roll while another one also to the outer surface of a heated, endless metal belt, they are moved along with the roll and the belt while the last one or the remaining ones is/are inserted between the previous two thermoplastic resin sheets or films, then all these thermoplastic resin sheets or films are pressed together between the outer surface of the roll and the outer surface of the endless metal belt, and thereafter the resulting laminate is released from the contact with the roll and then from that with the endless metal belt to be removed therefrom.

The third method of the present invention will be explained in detail hereunder. The third method uses three kinds of thermoplastic resin sheets or films.

For example, three or more untreated sheets 2, 2', 2'' and so on of the same kind or different kinds are let out from letting-out rolls 1, 1', 1'' and so on, respectively, these are preferably pre-heated with pre-heating rolls, and then the first untreated sheet 2 of these is moved while being kept adhered to the outer surface of the hot roll 4 like in the first method mentioned above. The second untreated sheet 2' of these is moved while being kept adhered to the outer surface of the heated, endless metal belt 5. The other untreated sheet or sheets is/are inserted between the previous two thermoplastic resin sheets or films at the point near to the contact point at which the outer surface of the hot roll 4 is brought into contact with the outer surface of the endless metal belt 5, and thereafter all these thermoplastic resin sheets or films are pressed together between the outer surface of the hot roll 4 and the outer surface of the endless metal belt 5.

The materials of the hot roll 4 and the endless metal belt 5 and the other conditions in the third method are the same as those in the first and second methods mentioned above.

After the process of the third method, the pressed sheets or films are treated in the same manner as in the second method mentioned above, to finally obtain a multi-layered laminate of thermoplastic resins.

Also in this case, the treated laminate is glazed or embossed to be a multi-layered laminate with higher quality, like in the second method mentioned above.

The thermoplastic resin sheets or films thus obtained by the methods of the present invention mentioned above have well-balanced properties. By smoothing (glazing) or embossing the sheets or films in accordance with the present invention, their quality is improved much and the sheets or films produced by the present invention have extremely high commercial values.

The present invention will be explained in more detail by means of the following examples, which, however, are not intended to restrict the scope of the present invention.

### EXAMPLE 1 (Surface Smoothing):

Using the device illustrated in Fig. 5, a thermoplastic resin sheet was glazed (smoothed) in the manner mentioned below.

As the untreated sheet 2, used was a non-stretched polypropylene sheet having an inside haze of 5 %, a total haze of 15 %, a surface gloss of 90 % and a thickness of 300 µm. Regarding the treating conditions, the temperature of the hot roll 4 was at 130° C, the temperature of the endless metal belt 5 was at 145° C, the surface roughness of the hot roll 4 was 0.2 µm, the surface roughness of the endless metal belt 5 was 0.2 µm, the plane pressure between the hot roll 4 and the endless metal belt 5 was 3 kg/cm2, the line pressure between the hot roll 4 and the backup roll 8 was 50 kg/cm, and the speed of the sheet being treated was 40 m/min.

The untreated sheet 2 mentioned above was moved while being kept adhered to the outer surface of the hot roll 4 under the conditions mentioned above, then inserted and pressed between the outer surface of the hot roll 4 and the outer surface of the endless metal belt 5, and thereafter it was released from the contact with the hot roll 4 and then from the contact with the endless metal belt 5 to be removed from them. Hence, a treated sheet was obtained.

The treated sheet had a thickness of 298 µm, an inside haze of 1 %, a total haze of 2 %, and a surface gloss of 140 %. The both surfaces of the treated sheet were satisfactorily glossy, and the sheet thus obtained had good transparency.

### EXAMPLE 2 (Embossing):

The same process as in Example 1 was repeated, except that an embossing roll was used as the hot roll 4, that the temperature of the hot roll 4 was at 140° C and that the temperature of the endless metal belt was at 150° C. After the process, a good embossed sheet was obtained.

### EXAMPLE 3 (Surface Smoothing with Lamination):

Using the device illustrated in Fig. 6, lamination of thermoplastic resin sheets with smoothing the surfaces of the resulting laminate was carried out.

Precisely, non-stretched polypropylene sheets each having an inside haze of 5 %, a total haze of 15 %, a surface gloss of 90 % and a thickness of 300 µ m were used as the untreated sheets 2 and 2'.

Regarding the treating conditions, the temperature of the hot roll 4 was at 140° C, the temperature of the endless metal belt 5 was at 150° C, the surface roughness of the hot roll 4 was 0.2 µm, the surface roughness of the endless metal belt 5 was 0.2 µm, the plane pressure between the hot roll 4 and the endless metal belt 5 was 3 kg/cm2, the line pressure between the hot roll 4 and the backup roll 8 was 50 kg/cm, and the speed of the sheets being treated was 40 m/min. Under the conditions, the two sheets were laminated together.

As a result, a wrinkle-free smooth sheet having a thickness of 595 µm was obtained, and it had good surfaces. Though having tried to measure the lamination strength in the laminated site of the laminate sheet thus obtained, peeling was impossible.

In accordance with the methods of the present invention that have been explained in detail hereinabove, non-stretched thermoplastic resin sheets, films and laminates may be produced by high-quality and high-degree treatments for smoothing (glazing) or embossing their surfaces or for laminating two or more sheets or films with smoothing the resulting laminate.

In addition, in accordance with the methods of the present invention, such sheets, films and laminates are efficiently produced by simple operation.

Where untreated thermoplastic resin sheets or films having high transparency are treated in accordance with the methods of the present invention, thick sheets or films having improved transparency and surface gloss may be obtained.

Since the methods of the present invention can be carried out, using small and simple devices, they are economical. In addition, they may be carried out by simple operation, their productivity is extremely excellent.

Accordingly, the thermoplastic resin sheets, films and laminates to be obtained by the methods of the present invention are suitable for wrapping foods, medicines, etc.

While the invention has been described in detail and with reference to specific embodiments thereof, it will be apparent to one skilled in the art that various changes and modifications can be made therein without departing from the scope thereof.

## Claims

1. A method for producing a thermoplastic resin sheet or film, the surface of which is smoothed or embossed, in which a thermoplastic resin is hot-melted and then cooled to give a thermoplastic resin sheet or film, it is pressed against the outer surface of a heated roll or a heated, endless metal belt, adhered thereto under heat and moved along with the roll or belt, then it is inserted and pressed between the outer surface of the heated roll and the outer surface of the heated endless metal belt, and thereafter it is released from the contact with the roll and then from that with the endless metal belt to be removed therefrom, wherein in case of glazing (smoothing) the outer surface of the heated roll and the heated endless metal belt are mirror finished, and in case of embossing the heated roll is an embossing roll or an embossing paper is sandwiched between the thermoplastic resin sheet or film and the heated endless metal belt.

2. A method for producing a laminate sheet or film, the surface of which is smoothed or embossed, of thermoplastic resins using two kinds of thermoplastic resin sheets or films each obtained by hot-melting a thermoplastic resin and then cooling it, in which one of the thermoplastic resin sheets or films is pressed against and adhered under heat to the outer surface of a heated roll while the other also to the outer surface of a heated, endless metal belt, they are moved along with the roll and the belt, then the both thermoplastic resin sheets or films are inserted and pressed together between the outer surface of the roll and the outer surface of the endless metal belt, and thereafter the resulting laminate is released from the contact with the roll and them from that with the endless metal belt to be removed therefrom, wherein in case of glazing (smoothing) the outer surface of the sheated roll and the heated endless metal belt are mirror finished, and in case of embossing the heated roll is an embossing roll or an embossing paper is sandwiched between the laminate resin sheet or film and the heated endless metal belt.

3. A method for producing a laminate sheet or film, the surface of which is smoothed or embossed, of thermoplastic resins using thermoplastic resin sheets or films of three kinds or more each obtained by hot-melting a thermoplastic resin and then cooling it, in which one of the thermoplastic resin sheets or films is pressed against and adhered under heat to the outer surface of a heated roll while another one also to the outer surface of a heated, endless metal belt, they are moved along with the roll and the belt while the last one or the remaining ones is/are inserted between the previous two thermoplastic resin sheets or films, then all these thermoplastic resin sheets or films are pressed together between the outer surface of the roll and the outer surface of the endless metal belt, and thereafter the resulting laminate is released from the contact with the roll and then from that with the endless metal belt to be removed therefrom, wherein in case of glazing (smoothing) the outer surface of the heated roll and the heated endless metal belt are mirror finished, and in case of embossing the heated roll is an embossing roll or an embossing paper is sandwiched between the laminate resin sheet or film and the heated endless metal belt.

4. The method as claimed in anyone of claims 1 to 3, in which the thermoplastic resin sheet(s) or film(s) is/are pressed under a pressure of 1 kg/cm2 or higher.

## Patentansprüche

1. Verfahren zur Herstellung einer thermoplastischen Harzfolie bzw. eines thermoplastischen Harzfilms, deren Oberflächen geglättet oder geprägt sind, worin ein thermoplastisches Harz in der Hitze geschmolzen wird, anschließend abgekühlt wird, um eine thermoplastische Harzfolie bzw. einen thermoplastischen Harzfilm zu ergeben, die dann gegen die äußere Oberfläche einer erhitzten Walze oder eines erhitzten, endlosen Metallbandes gepreßt werden, daran in der Hitze haften, mit der Walze oder dem Band fortbewegt werden, anschließend zwischen die äußere Oberfläche der erhitzten Walze und die äußere Oberfläche des erhitzten endlosen Metallbandes eingeführt und zusammengepreßt werden und schließlich der Kontakt mit der Walze und dann mit dem endlosen Metallband gelöst werden, um sie davon zu entfernen, worin im Falle des Glättens die äußere Oberfläche der erhitzten Walze und des erhitzten endlosen Metallbandes hochglanzpoliert sind, und im Falle des Prägens die erhitzte Walze eine Prägewalze ist, oder ein Prägepapier zwischen die thermoplastische Harzfolie bzw. den thermoplastischen Harzfilm und das erhitzte endlose Metallband gelegt wird.

2. Verfahren zur Herstellung einer Laminatfolie bzw. eines Laminatfilms, deren Oberfläche geglättet oder geprägt sind aus thermoplastischen Harzen unter Verwendung von zwei Arten von thermoplastischen Harzfolien bzw. thermoplastischen Harzfilmen, die jeweils durch Heißschmelzen eines thermoplastischen Harzes und anschließendes Abkühlen erhalten wurden, worin eine der thermoplastischen Harzfolien bzw. der thermoplastischen Harzfilme gegen die äußere Oberfläche einer erhitzten Walze gepreßt wird und daran haftet, während die andere ebenfalls an die äußere Oberfläche eines erhitzten endlosen Metallbandes gepreßt wird und daran haftet, sie gemeinsam mit der Walze und dem Band weiterbewegt werden, anschließend die beiden thermoplastischen Harzfolien bzw. thermoplastischen Harzfilme zwischen die äußere Oberfläche der Walze und die äußere Oberfläche des endlosen Metallbandes eingeführt und zusammengepreßt werden und schließlich der Kontakt des resultierenden Laminates mit der Rolle und dann mit dem endlosen Metallband gelöst werden, um sie davon zu entfernen, worin im Falle des Glättens die äußere Oberfläche der erhitzten Walze und des erhitzten endlosen Metallbandes hochglanzpoliert sind, und im Falle des Prägens die erhitzte Walze eine Prägewalze ist, oder ein Prägepapier zwischen die thermoplastische Laminatharzfolie bzw. den thermoplastischen Laminatharzfilm und das erhitzte endlose Metallband gelegt wird.

3. Verfahren zur Herstellung einer Laminatfolie bzw. eines Laminatfilms, deren Oberfläche geglättet oder geprägt sind aus thermoplastischen Harzen unter Verwendung von drei oder mehr Arten thermoplastischer Harzfolien bzw. thermoplastischer Harzfilmen, die jeweils durch Heißschmelzen eines thermoplastischen Harzes und anschließendem Abkühlen erhalten wurden, worin eine der thermoplastischen Harzfolien bzw. thermoplastischen Harzfilme im erhitzten Zustand an die äußere Oberfläche einer geheizten Walze gepreßt wird und daran haftet, während eine andere ebenfalls an die äußere Oberfläche eines erhitzten endlosen Metallbandes gepreßt wird und daran haftet, sie zusammen mit der Walze und dem Band fortbewegt werden, wobei die letzte oder die verbleibenden Folie(n) bzw. der letzte oder die verbleibenden Film(e) zwischen die beiden zuvor erwähnten thermoplastischen Harzfolien bzw. thermoplastischen Harzfilme eingeführt werden, anschließend die gesamten thermoplastischen Harzfolien bzw. thermoplastischen Filme zwischen der äußeren Oberfläche der Walze und der äußeren Oberfläche des endlosen Metallbandes zusammengepreßt werden und schließlich der Kontakt des resultierenden Laminates mit der Walze und anschließend mit dem endlosen Metallband gelöst werden, um sie davon zu entfernen, worin im Falle des Glättens die äußere Oberfläche der erhitzten Walze und des erhitzten endlosen Metallbandes hochglanzpoliert sind, und im Falle des Prägens die erhitzte Walze eine Prägewalze ist, oder ein Prägepapier zwischen die thermoplastische Laminatharzfolie bzw. den thermoplastischen Laminatharzfilm und das erhitzte endlose Metallband gelegt wird.

4. Verfahren nach irgend einem der Ansprüche 1 bis 3, worin die thermoplastische(n) Harzfolie(n) bzw. der/die thermoplastische(n) Harzfilm(e) unter einem Druck von 1 kg/cm² oder mehr zusammengepreßt werden.

## Revendications

1. Procédé de production d'une feuille ou d'un film en résine thermoplastique, dont la surface est lissée ou gaufrée, dans lequel une résine thermoplastique est fondue à chaud et ensuite refroidie pour donner une feuille ou un film en résine thermoplastique, il est pressé contre la surface externe d'un rouleau chauffé ou d'une courroie métallique sans fin chauffée, il adhère à celle-ci à chaud, et il est transporté avec le rouleau ou la courroie, puis il est inséré et pressé entre la surface externe du rouleau chauffé et la surface externe de la courroie métallique sans fin chauffée, et après cela il est libéré du contact avec le rouleau et ensuite de celui avec la courroie métallique sans fin pour être retiré de ceux-ci, dans lequel, dans le cas d'un glaçage (lissage), la surface externe du rouleau chauffé et de la courroie métallique sans fin chauffée ont un fini miroir, et dans le cas d'un gaufrage, le rouleau chauffé est un rouleau de gaufrage, ou bien un papier pour gaufrage est intercalé entre la feuille ou le film en résine thermoplastique et la courroie métallique sans fin chauffée.

2. Procédé de production d'une feuille ou d'un film stratifié, dont la surface est lissée ou gaufrée, constitué de résines thermoplastiques, en utilisant deux types de feuilles ou de films en résine thermoplastique, chacun obtenu en fondant à chaud une résine thermoplastique et ensuite en la refroidissant, dans lequel l'une des feuilles ou l'un des films en résine thermoplastique est pressé et adhère à chaud à la surface externe d'un rouleau chauffé, tandis que l'autre adhère également à la surface externe d'une courroie métallique sans fin chauffée, ils sont déplacés conjointement au rouleau et à la courroie, puis les deux feuilles ou films en résine thermoplastique sont insérés et pressés ensemble entre la surface externe du rouleau et la surface externe de la courroie métallique sans fin, et après cela le stratifié résultant est libéré du contact avec le rouleau et ensuite de celui avec la courroie métallique sans fin, pour être retiré de ceux-ci, dans lequel, dans le cas d'un glaçage (lissage), la surface externe du rouleau chauffé et de la courroie métallique sans fin chauffée ont un fini miroir, et dans le cas d'un gaufrage, le rouleau chauffé est un rouleau de gaufrage, ou bien un papier pour gaufrage est intercalé entre la feuille ou le film stratifié en résine et la courroie métallique sans fin chauffée.

3. Procédé de production d'une feuille ou d'un film stratifié, dont la surface est lissée ou gaufrée, constitué de résines thermoplastiques, en utilisant des feuilles ou des films en résine thermoplastique de trois types ou davantage, obtenus chacun par fusion à chaud d'une résine thermoplastique et ensuite par refroidissement de celle-ci, dans lequel l'une des feuilles ou des films en résine thermoplastique est pressé et adhère à chaud à la surface externe du rouleau chauffé, tandis qu'une autre adhère également à la surface externe d'une courroie métallique sans fin chauffée, ils sont transportés avec le rouleau et la courroie, tandis que le dernier ou les restants est / sont inséré(s) entre les deux feuilles ou films en résine thermoplastique précédents, puis toutes les feuilles ou tous ces films en résine thermoplastique sont pressés ensemble entre la surface externe du rouleau et la surface externe de la courroie métallique sans fin, et après cela le stratifié résultant est libéré du contact avec le rouleau et puis de celui avec la courroie métallique sans fin, pour être retiré de ceux-ci, dans lequel, dans le cas d'un glaçage (lissage) la surface externe du rouleau chauffé et de la courroie métallique sans fin chauffée ont un fini miroir, et dans le cas d'un gaufrage, le rouleau chauffé est un rouleau de gaufrage, ou bien un papier pour gaufrage est intercalé entre la feuille ou le film stratifié en résine et la courroie métallique sans fin chauffée.

4. Procédé tel que revendiqué dans l'une quelconque des revendications 1 à 3, dans lequel la / les feuille(s) ou le / les film(s) en résine thermoplastique est / sont pressés sous une pression de 1 kg/cm² ou supérieure.
